Europäisches Patentamt

European Patent Office

Office européen des brevets

(19)

(11) Publication number: **0 337 577**
**A1**

# EUROPEAN PATENT APPLICATION

(12)

(21) Application number: **89200919.2**

(22) Date of filing: **13.04.89**

(51) Int. Cl.⁴: **B60B 19/00**

(30) Priority: **15.04.88 NL 8800978**

(43) Date of publication of application:
**18.10.89 Bulletin 89/42**

(84) Designated Contracting States:
**BE DE FR GB IT NL SE**

(71) Applicant: **van de Vijver, K. P. M.**
**Kievitenstraat 6**
**B-8300 Knokke-Heist(BE)**

(72) Inventor: **van de Vijver, K. P. M.**
**Kievitenstraat 6**
**B-8300 Knokke-Heist(BE)**

(54) **Wheel unit assembly.**

(57) The invention concerns a weelframeadapter, meant for vehicles to be used in agriculture or on terrains with very soft soil conditions. This adapter can be mounted onto the vehicle in place of the steering wheels. The wheel (3) in the wheelframe (1) has an independent hydraulic drive (5). The wheel (3) is turnable around a vertical axis by means of a bearing (7) and is hydraulically adjustable by a hydraulic motor (12).

FIG 1

EP 0 337 577 A1

## Wheel unit assembly

The invention concerns a wheel unit assembly, suitable for vehicles used in agricultural activities or on land with very soft soil. This wheel unit assembly is mounted onto the vehicle on the place of the steerable wheels. The wheel in the wheel unit has an independent hydraulic drive. The wheel suspension rotates around a vertical axis and is hydraulically adjustable.

Farm tractors can be fitted with wheel unit assemblies or extra-large special cross-country tyres fairly easily. However, the front wheel construction does not allow this to be done. This means that vihicles which have to be used in activities on soft soil must be built espcially for use of the same type of tyre for the front wheels as well. The biggest problem is mainly due to the fact that the turning circle becomes disproportionately large.

The present invention affords a solution for this problem. By mounting a wheel unit with one wheel which rotates around a vertical axis on the place of the steerable wheels or slightly in front of it, it becomes possible to rebuild existing tractors in an economical way.

It has become apparent that a number of additional facilities are necessary to accomplish this. When the frontwheel is turned 90° from the central position, the tyre is fairly soon pushed off the rim by the rear wheels. In order to prevent this from happening, a hydraulic wheel drive has been built in. The hydraulic wheel drive makes it possible for the vehicle to rotate around its rear axle. This decreases the turning circle to a minimum. It does, however, result in low speeds on hard soil. Therefore, the wheel drive can be switched off by a signal from the speedometer. If longer distances have to be covered, the wheel drive may be switched off manually. The risk of the tyre being pushed off the rim only exists when driving on hard soil. To avoid this, a device which switches the wheel drive back on is activated if the wheel unit rotates more than approximately 60° from the central position.

The invention is discussed on the basis of the following picture material:

Figure 1] shows the wheel unit assembly from the side;
Figure 2] shows the wheel in cross-section;
Figure 3] shows the wheel unit from above;
Figure 4] shows the rotating point of the wheel suspension in cross-section.

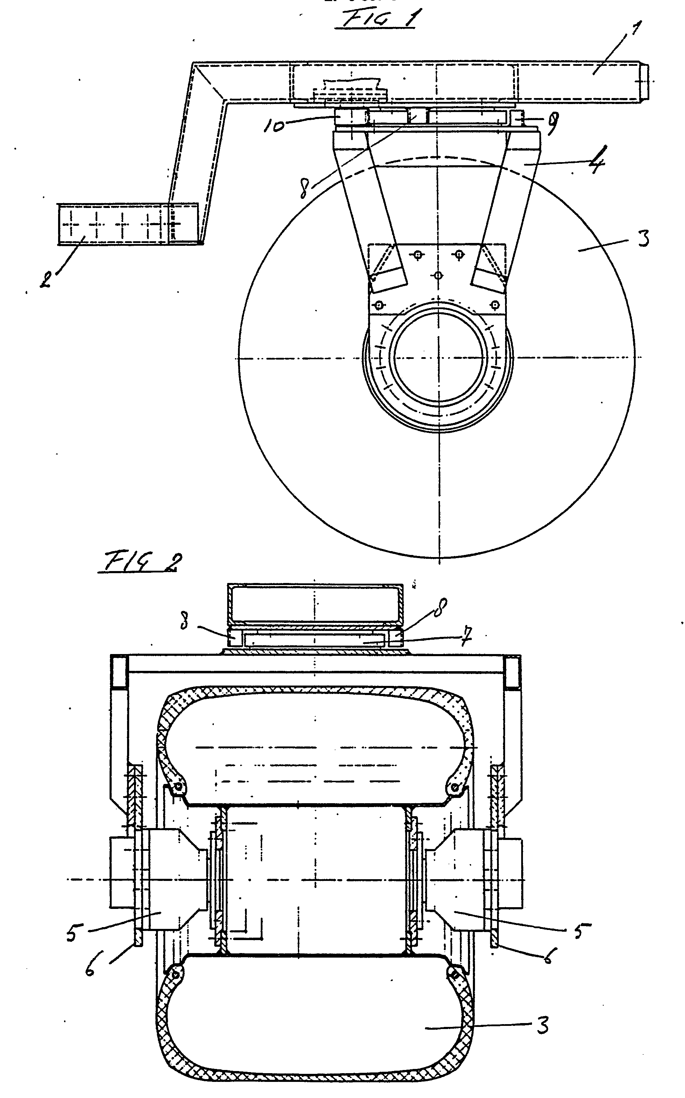

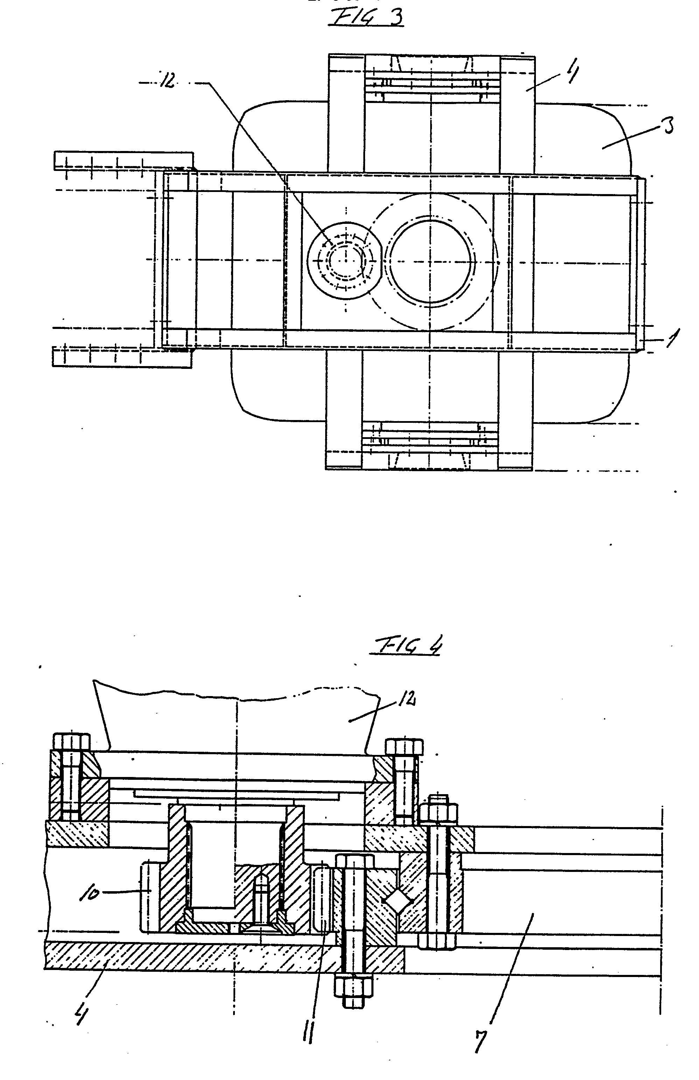

In Figure 1], 1) represents the frame of the wheel unit assembly and 2) represents the elements which serve to mount the wheel unit assembly to the existing tractor on the place of the steerable wheels. Designs differ from type to type. 3) represents the wheel which has been suspended in a fork, 4) with two synchronized hydraulic devices, 5), in this case, which are mounted to fork 4) by means of an auxiliary frame, 6), and can be removed. On fork 4), a turntable 7), has been mounted by means of edging catches 8) and 9). Pinion 10) engages with the teeth , 11) of the turntable, 7). The hydraulic device, 12), drives the pinion, 10) into two directions.

The hydraulic circuit of devices, 5) may be switched off manually in case one has to drive on hard terrain for a longer period of time. On the frame, 1), ther is a sensor (not shown in the picture material), which determines if the fork has not rotated too much (more than approximately 60°). If the wheel drive is switched off and in the case of intensive manoeuvring, the hydraulic drive is switched back on to prevent the tyre from being pushed of the tyre. The small turning circle may be used again.

During activities on soil with differing degrees of softness (for example, going from a field on to a paved road), it turned out to be necessary to switch off the hydraulic devices at a certain speed - depending on the capacity of the pump. A speed sensor (not shown in the picture mterial), which determines this moment, has been provided.

### Claims

1: Wheel unit assembly for a wheeled vehicle provided with a wheel suspension with one wheel mounted in it to replace the original steerable wheels with the feature that the wheel suspension rotates hydraulically over an angle of 180° around a vertical axis.

2: Wheel unit assembly according to claim 1 with the feature that the wheel in the wheel suspension is a cross-country tyre with hydraulic drive.

3: Wheel unit assembly according to claim 1) and 2) with the feature that the wheel is provided withe a very large cross-country tyre.

4: Wheel unit assembly according claim 1), 2) and 3) with the feature that, when using the vehicle with the hydraulic drive switched off, it is switched on in case the wheel suspension is turned more than approximately 60° from the central position.

5: Wheel unit assembly according to the claim 1), 2), 3) and 4), with the feature that the hydraulic drive of the wheel is switched off when the speed of the vehicle exceeds a speed determined by the capacity of the drive.

## FIG 1

1

2

10

9

8

4

3

## FIG 2

8

8

7

5

5

6

6

3

EP 0 337 577 A1

FIG 3

FIG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 997 018  (HERBST) <br> * Column 2, line 43 - column 3, line 12; column 5, lines 34-60; figures 2,4,5 * <br> --- | 1-3 | B 60 B  19/00 |
| X | US-A-2 802 541  (ALBEE) <br> * Column 5, line 69 - column 6, line 3; column 6, lines 50-54; figures 1,8 * <br> --- | 1 | |
| A | DE-C-  687 444  (SCHNELL) <br> * Page 2, lines 37-41; figures 4,9 * <br> ----- | 1 | |

TECHNICAL FIELDS SEARCHED (Int. Cl.4)

B 60 B
B 62 D
B 66 C
B 60 K

The present search report has been drawn up for all claims

| Place of search | Date of completion of the search | Examiner |
|---|---|---|
| THE HAGUE | 18-07-1989 | AYITER I. |

EPO FORM 1503 03.82 (P0401)